# EUROPÄISCHE PATENTANMELDUNG

(11) **EP 4 645 061 A1**
(43) Veröffentlichungstag der Anmeldung: **05.11.2025**
(21) Anmeldenummer: 25173818.3
(22) Anmeldetag: 30.04.2025
(51) Int. Cl.: G06F 3/12, B42D 25/40, B41M 3/14, G06T 1/00

(54) **VERFAHREN UND VORRICHTUNG ZUM HERSTELLEN EINES DOKUMENTS MIT EINEM SICHERHEITSMERKMAL**

(30) Priorität: 03.05.2024 DE 102024112438
(71) Anmelder: Bundesdruckerei GmbH, 10969 Berlin (DE)
(72) Erfinder: HEUBERGER-LEWERENZ, Adrian, 12526 Berlin (DE); SAUTER, Dieter, 83727 Schliersee (DE)
(74) Vertreter: Patentship Patentanwaltsgesellschaft mbH

(57) **Zusammenfassung**

Verfahren (100) zum automatisierten Herstellen eines Dokuments (201) mit einem Sicherheitsmerkmal (203), umfassend: Bereitstellen (101) einer digitalen Dokumentendruckvorlage (205) für die Herstellung des Dokuments (201) mit dem Sicherheitsmerkmal (203), wobei das Sicherheitsmerkmal (203) eine um einen vorbestimmten Verkleinerungsfaktor verkleinerte Fassung eines Referenzsicherheitsmerkmals (207) ist; und automatisiertes Herstellen (103) des Dokuments (201) unter Verwendung der digitalen Dokumentendruckvorlage (205).

## Beschreibung

Die vorliegende Erfindung betrifft ein Verfahren zum automatisierten Herstellen eines Dokuments mit einem Sicherheitsmerkmal, eine Vorrichtung zum automatisierten Herstellen eines Dokuments mit einem Sicherheitsmerkmal sowie ein Verfahren zum automatisierten Herstellen einer digitalen Dokumentendruckvorlage zum Herstellen eines Dokuments.

Eine ressourcenschonende Herstellung kann bei Dokumenten zu einer Steigerung der Produktivität und einer Verringerung des Material- und Energieverbrauchs führen. Üblicherweise können hierzu beispielsweise Substrate recycelt und Druckfarben langlebiger ausgestaltet werden.

Es ist daher eine Aufgabe der vorliegenden Erfindung, effiziente Verfahren und eine effiziente Vorrichtung zur Herstellung eines Dokuments bereitzustellen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt wird die erfindungsgemäße Aufgabe gelöst durch ein Verfahren zum automatisierten Herstellen eines Dokuments mit einem Sicherheitsmerkmal, umfassend: Bereitstellen einer digitalen Dokumentendruckvorlage für die Herstellung des Dokuments mit dem Sicherheitsmerkmal, wobei das Sicherheitsmerkmal eine um einen vorbestimmten Verkleinerungsfaktor verkleinerte Fassung eines Referenzsicherheitsmerkmals ist; und automatisiertes Herstellen des Dokuments unter Verwendung der digitalen Dokumentendruckvorlage.

Dadurch wird der technische Vorteil erreicht, dass ein Dokument hergestellt werden kann, das möglichst ressourcenschonend ist, sowie beispielsweise weniger Material und/oder Energie bei der Herstellung verbraucht. Zudem können auch ein Energieverbrauch bei einem Transport des Dokuments und ein Platzverbrauch bei einer Lagerung des Dokuments reduziert werden, insbesondere bei einer Vielzahl von Dokumenten.

Das Dokument kann eines der folgenden Dokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Banknote oder eine Bankkarte oder eine Kreditkarte.

Gemäß einer Ausführungsform wird im Schritt des Bereitstellens der digitalen Dokumentendruckvorlage eine digitale Referenzdruckvorlage des Dokuments bereitgestellt, und wobei die digitale Referenzdruckvorlage um den vorbestimmten Verkleinerungsfaktor verkleinert wird, um die digitale Dokumentendruckvorlage zu erhalten.

Dadurch wird der technische Vorteil erreicht, dass die digitale Dokumentendruckvorlage effizient bereitgestellt werden kann.

Gemäß einer Ausführungsform umfasst das Bereitstellen der digitalen Dokumentendruckvorlage für die Herstellung des Dokuments mit dem Sicherheitsmerkmal: Erfassen eines Bilds eines weiteren Dokuments und Generieren der digitalen Referenzdruckvorlage basierend auf dem Bild des weiteren Dokuments.

Dadurch wird der technische Vorteil erreicht, dass weniger ressourcenschonende Dokumente zur Generierung der digitalen Referenzdruckvorlage verwendet werden können.

Gemäß einer Ausführungsform wird im Schritt des Bereitstellens der digitalen Dokumentendruckvorlage die digitale Dokumentendruckvorlage aus einer Mehrzahl von digitalen Dokumentendruckvorlagen des Dokuments mit verkleinerten Sicherheitsmerkmalen anhand des vorbestimmten Verkleinerungsfaktors ausgewählt.

Dadurch wird der technische Vorteil erreicht, dass eine möglichst geeignete digitale Dokumentenvorlage für eine möglichst effiziente Herstellung des Dokuments ausgewählt werden kann. Beispielsweise kann die digitale Dokumentendruckvorlage diejenige aus der Mehrzahl von digitalen Dokumentendruckvorlagen des Dokuments sein, die den kleinsten Verkleinerungsfaktor ermöglicht.

Gemäß einer Ausführungsform umfassen die Mehrzahl von digitalen Dokumentdruckvorlagen unterschiedliche Abmessungen des Dokuments in der digitalen Dokumentdruckvorlage und/oder unterschiedliche Abmessungen des Sicherheitsmerkmals und/oder unterschiedliche Anordnungen des Sicherheitsmerkmals.

Dadurch wird der technische Vorteil erreicht, dass eine möglichst geeignete digitale Dokumentenvorlage für eine möglichst effiziente Herstellung des Dokuments ausgewählt werden kann.

Gemäß einer Ausführungsform gibt der vorbestimmte Verkleinerungsfaktor eine relative Höhe, eine relative Breite und/oder eine relative Tiefe des Sicherheitsmerkmals zu dem Referenzsicherheitsmerkmal an.

Dadurch wird der technische Vorteil erreicht, dass die relative Höhe, relative Breite und/oder relative Tiefe des Sicherheitsmerkmals als effiziente Anweisung zur Herstellung des Dokuments verwendet werden kann.

Gemäß einer Ausführungsform umfasst das Verfahren ein Ermitteln des vorbestimmten Verkleinerungsfaktors basierend auf zumindest einem Parameter des Referenzsicherheitsmerkmals.

Dadurch wird der technische Vorteil erreicht, dass der vorbestimmte Verkleinerungsfaktor abhängig von Eigenschaften des Referenzsicherheitsmerkmals bestimmt werden kann, insbesondere optimiert werden kann.

Gemäß einer Ausführungsform umfasst der zumindest eine Parameter des Referenzsicherheitsmerkmals: einen Zusammenhang zwischen Abmessung des Referenzsicherheitsmerkmals und einem Alphafehler und/oder einem Betafehler und/oder einer Überprüfungsdauer bei einer automatischen Echtheitsüberprüfung des um den vorbestimmten Verkleinerungsfaktor verkleinerten Sicherheitsmerkmals durch eine Überprüfungsvorrichtung, und/oder einen Zusammenhang zwischen Abmessung des Referenzsicherheitsmerkmals und einem Alphafehler und/oder einem Betafehler und/oder einer Überprüfungsdauer bei einer manuellen Echtheitsüberprüfung des um den vorbestimmten Verkleinerungsfaktor verkleinerten Sicherheitsmerkmals durch einen Benutzer.

Dadurch wird der technische Vorteil erreicht, dass der vorbestimmte Verkleinerungsfaktor hinsichtlich des Alphafehlers und/oder des Betafehlers und/oder der Überprüfungsdauer bei der automatischen und/oder manuellen Echtheitsüberprüfung optimiert werden kann, bzw. ein geeigneter Kompromiss gefunden werden kann, beispielsweise durch Gewichtung einer Zielwertfunktion.

Als Alphafehler wird üblicherweise das fehlerhafte Ablehnen einer Nullhypothese verstanden, und vorliegend, dass das Dokument fehlerhaft durch die Überprüfungsvorrichtung bzw. den Benutzer als unecht ermittelt wird. Als Betafehler wird üblicherweise das fehlerhafte Nichtablehnen einer Nullhypothese verstanden, und vorliegend, dass das Dokument fehlerhaft durch die Überprüfungsvorrichtung bzw. den Benutzer als nicht unecht, d.h. echt, ermittelt wird.

Gemäß einer Ausführungsform umfasst das Verfahren ein Ermitteln des vorbestimmten Verkleinerungsfaktors basierend auf zumindest einem Parameter einer Vorrichtung zum automatisierten Herstellen des Dokuments.

Dadurch wird der technische Vorteil erreicht, dass der vorbestimmte Verkleinerungsfaktor abhängig von Eigenschaften der Vorrichtung zum automatisierten Herstellen des Dokuments bestimmt werden kann, insbesondere optimiert werden kann.

Gemäß einer Ausführungsform umfasst der zumindest eine Parameter der Vorrichtung zum automatisierten Herstellen des Dokuments: einen Zusammenhang zwischen der Abmessung des Sicherheitsmerkmals und einem Energieeinsatz, und/oder einem Materialeinsatz und/oder einer Herstellungszeitdauer bei der Herstellung des Dokuments.

Dadurch wird der technische Vorteil erreicht, dass der vorbestimmte Verkleinerungsfaktor hinsichtlich des Energieeinsatzes, und/oder dem Materialeinsatzes und/oder der Herstellungszeitdauer bei der Herstellung des Dokuments optimiert werden kann, bzw. ein geeigneter Kompromiss gefunden werden kann, beispielsweise durch Gewichtung einer Zielwertfunktion.

Gemäß einer Ausführungsform umfasst das Dokument ein weiteres Sicherheitsmerkmal, wobei die digitale Dokumentendruckvorlage das weitere Sicherheitsmerkmal umfasst, wobei das weitere Sicherheitsmerkmal eine um einen weiteren vorbestimmten Verkleinerungsfaktor verkleinerte Fassung eines weiteren Referenzsicherheitsmerkmals ist, und wobei das Verfahren ferner umfasst: Bestimmen des vorbestimmten Verkleinerungsfaktors basierend auf dem weiteren vorbestimmten Verkleinerungsfaktor.

Dadurch wird der technische Vorteil erreicht, dass der Verkleinerungsfaktor abhängig von dem weiteren Verkleinerungsfaktor bestimmt werden kann, beispielsweise wenn das Sicherheitsmerkmal und das weitere Sicherheitsmerkmal sich bei der Überprüfung des Dokuments gegenseitig beeinflussen, wie beispielsweise aufgrund von Interferenzen oder Überlappungen. Der weitere vorbestimmte Verkleinerungsfaktor kann beispielsweise gleich oder unterschiedlich zu dem Verkleinerungsfaktor sein.

Der weitere vorbestimmte Verkleinerungsfaktor für das weitere Sicherheitsmerkmal kann analog zu dem vorbestimmten Verkleinerungsfaktor für das Sicherheitsmerkmal bestimmt werden. Insofern gelten Ausführungsformen für die Bestimmung des vorbestimmten Verkleinerungsfaktors analog für eine Bestimmung des weiteren vorbestimmten Verkleinerungsfaktors.

Gemäß einer Ausführungsform wird das Bestimmen des vorbestimmten Verkleinerungsfaktors basierend auf einer Gewichtung des vorbestimmten Verkleinerungsfaktors und einer Gewichtung des weiteren vorbestimmten Verkleinerungsfaktors durchgeführt, insbesondere anhand einer Optimierung eines Zielwerts, wobei insbesondere die jeweilige Gewichtung auf dem zumindest einen Parameter des Referenzsicherheitsmerkmals und/oder auf dem zumindest einem Parameter der Vorrichtung zum automatisierten Herstellen des Dokuments basiert.

Dadurch wird der technische Vorteil erreicht, dass ein geeigneter Kompromiss zur Bestimmung des vorbestimmten Verkleinerungsfaktors gefunden werden kann, beispielsweise wenn Zielkonflikte zwischen der Minimierung des Verkleinerungsfaktors und des weiteren Verkleinerungsfaktors bestehen.

Gemäß einer Ausführungsform umfasst das Verfahren ferner: Neuanordnen des Sicherheitsmerkmals relativ zu dem weiteren Sicherheitsmerkmal in der digitalen Dokumentenvorlage.

Dadurch wird der technische Vorteil erreicht, dass das Sicherheitsmerkmal und das weitere Sicherheitsmerkmal optimal auf dem Dokument angeordnet werden können.

Gemäß einem zweiten Aspekt wird die erfindungsgemäße Aufgabe gelöst durch eine Vorrichtung zum automatisierten Herstellen eines Dokuments mit einem Sicherheitsmerkmal, umfassend: einen Prozessor, welcher ausgebildet ist, eine digitale Dokumentendruckvorlage für die Herstellung des Dokuments mit dem Sicherheitsmerkmal bereitzustellen, wobei das Sicherheitsmerkmal eine um einen vorbestimmten Verkleinerungsfaktor verkleinerte Fassung eines Referenzsicherheitsmerkmals ist; und ein Herstellungselement, welches ausgebildet ist, das Dokument unter Verwendung der digitalen Dokumentendruckvorlage automatisiert herzustellen.

Dadurch wird der technische Vorteil erreicht, dass ein Dokument hergestellt werden kann, das möglichst ressourcenschonend ist, sowie beispielsweise weniger Material und/oder Energie bei der Herstellung verbraucht. Zudem können auch ein Energieverbrauch bei einem Transport des Dokuments und ein Platzverbrauch bei einer Lagerung des Dokuments reduziert werden, insbesondere bei einer Vielzahl von Dokumenten.

Gemäß einem dritten Aspekt wird die erfindungsgemäße Aufgabe gelöst durch ein Verfahren zum automatisierten Herstellen einer digitalen Dokumentendruckvorlage zum Herstellen eines Dokumentes, mit: Bereitstellen einer digitalen Referenzdruckvorlage, wobei die digitale Referenzdruckvorlage ein Referenzsicherheitsmerkmal aufweist, Verkleinern der digitalen Referenzdruckvorlage, um einen vorbestimmten Verkleinerungsfaktor, und Ausgeben der verkleinerten digitalen Referenzdruckvorlage als die digitale Dokumentendruckvorlage.

Dadurch wird der technische Vorteil erreicht, dass eine Dokumentenvorlage für ein Dokument hergestellt werden kann, das möglichst ressourcenschonend ist, sowie beispielsweise weniger Material und/oder Energie bei der Herstellung verbraucht. Zudem können auch ein Energieverbrauch bei einem Transport des Dokuments und ein Platzverbrauch bei einer Lagerung des Dokuments reduziert werden, insbesondere bei einer Vielzahl von Dokumenten.

Vorstehend und nachstehend beschriebene Ausführungsformen des Verfahrens gemäß dem ersten Aspekt sind ebenfalls Ausführungsformen der Vorrichtung gemäß dem zweiten Aspekt und des Verfahrens gemäß dem dritten Aspekt.

Vorstehend und nachstehend beschriebene Ausführungsformen der Vorrichtung gemäß dem zweiten Aspekt sind ebenfalls Ausführungsformen des Verfahrens gemäß dem ersten Aspekt und des Verfahrens gemäß dem dritten Aspekt.

Vorstehend und nachstehend beschriebene Ausführungsformen des Verfahrens gemäß dem dritten Aspekt sind ebenfalls Ausführungsformen des Verfahrens gemäß dem ersten Aspekt und der Vorrichtung gemäß dem zweiten Aspekt.

Weitere Ausführungsbeispiele werden Bezug nehmend auf die beiliegenden Zeichnungen näher erläutert. Es zeigen:
- Fig. 1: ein schematisches Ablaufdiagramm eines Verfahrens zum automatisierten Herstellen eines Dokuments mit einem Sicherheitsmerkmal gemäß einer Ausführungsform;
- Fig. 2: eine schematische Darstellung einer Vorrichtung zum automatisierten Herstellen eines Dokuments mit einem Sicherheitsmerkmal gemäß einer Ausführungsform; und
- Fig. 3: ein schematisches Ablaufdiagramm eines Verfahrens zum automatisierten Herstellen einer digitalen Dokumentendruckvorlage zum Herstellen eines Dokuments gemäß einer Ausführungsform.

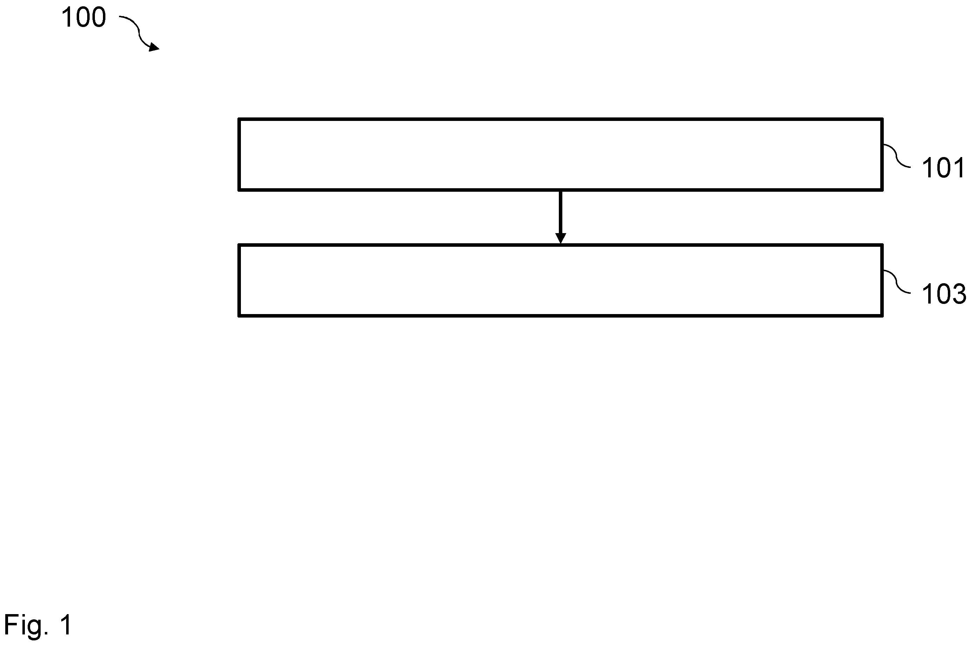

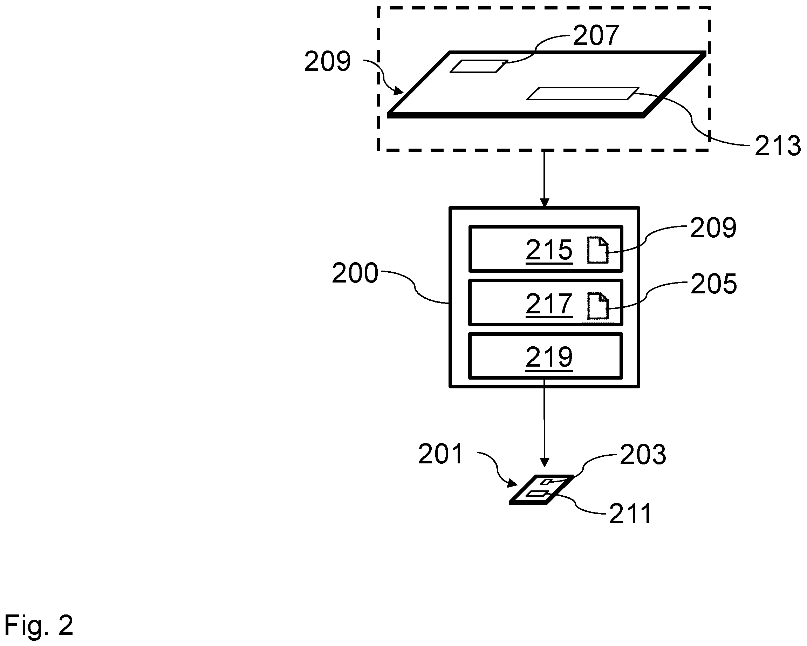

Fig. 1 zeigt ein schematisches Ablaufdiagramm eines Verfahrens 100 zum automatisierten Herstellen eines in der Fig. 2 dargestellten Dokuments 201 mit einem Sicherheitsmerkmal 203 gemäß einer Ausführungsform. Das Verfahren 100 wird im Folgenden unter weiterem Verweis auf die Fig. 2 beschrieben, welche eine Vorrichtung 200 zum automatisierten Herstellen des Dokuments 201 mit dem Sicherheitsmerkmal 203 zeigt.

Das Verfahren 100 umfasst ein Bereitstellen 101, insbesondere durch den Prozessor 217 der Vorrichtung 200, einer digitalen Dokumentendruckvorlage 205 für die Herstellung des Dokuments 201 mit dem Sicherheitsmerkmal 203. Das Sicherheitsmerkmal 203 ist eine um einen vorbestimmten Verkleinerungsfaktor verkleinerte Fassung eines Referenzsicherheitsmerkmals 207. Der vorbestimmte Verkleinerungsfaktor kann eine relative Höhe, eine relative Breite und/oder eine relative Tiefe des Sicherheitsmerkmals 203 zu dem Referenzsicherheitsmerkmal 207 angeben.

Das Verfahren 100 kann ein Ermitteln des vorbestimmten Verkleinerungsfaktors basierend auf zumindest einem Parameter des Referenzsicherheitsmerkmals 207 und/oder zumindest einem Parameter der Vorrichtung 200 zum automatisierten Herstellen des Dokuments 201 umfassen.

Der zumindest eine Parameter des Referenzsicherheitsmerkmals 207 kann umfassen: einen Zusammenhang zwischen Abmessung des Referenzsicherheitsmerkmals 207 und einem Alphafehler und/oder einem Betafehler und/oder einer Überprüfungsdauer bei einer automatischen Echtheitsüberprüfung des um den vorbestimmten Verkleinerungsfaktor verkleinerten Sicherheitsmerkmals 203 durch eine Überprüfungsvorrichtung zur Überprüfung des Dokuments 201, und/oder einen Zusammenhang zwischen Abmessung des Referenzsicherheitsmerkmals 207 und einem Alphafehler und/oder einem Betafehler und/oder einer Überprüfungsdauer bei einer manuellen Echtheitsüberprüfung des um den vorbestimmten Verkleinerungsfaktor verkleinerten Sicherheitsmerkmals 203 durch einen Benutzer. Als Alphafehler wird üblicherweise das fehlerhafte Ablehnen einer Nullhypothese verstanden, und vorliegend, dass das Dokument 201 fehlerhaft durch die Überprüfungsvorrichtung bzw. den Benutzer als unecht ermittelt wird. Als Betafehler wird üblicherweise das fehlerhafte Nichtablehnen einer Nullhypothese verstanden, und vorliegend, dass das Dokument 201 fehlerhaft durch die Überprüfungsvorrichtung bzw. den Benutzer als nicht unecht, d.h. echt, ermittelt wird.

Der zumindest eine Parameter der Vorrichtung 200 zum automatisierten Herstellen des Dokuments 201 kann umfassen: einen Zusammenhang zwischen der Abmessung des Sicherheitsmerkmals 203 und einem Energieeinsatz, und/oder einem Materialeinsatz und/oder einer Herstellungszeitdauer bei der Herstellung des Dokuments 201.

Eine digitale Referenzdruckvorlage 209 kann das Referenzsicherheitsmerkmal 207 umfassen. Das Verfahren 100 kann ein Bereitstellen der digitalen Referenzdruckvorlage 209 des Dokuments 201 umfassen. Die digitale Referenzdruckvorlage 209 kann um den vorbestimmten Verkleinerungsfaktor verkleinert werden, um die digitale Dokumentendruckvorlage 205 zu erhalten. Die digitale Referenzdruckvorlage 209 kann generiert werden, indem ein Bild eines weiteren Dokuments erfasst wird und die digitale Referenzdruckvorlage 209 basierend auf dem Bild des weiteren Dokuments generiert wird. Die digitale Referenzdruckvorlage 209 kann in einem nichtflüchtigen elektronischen Speicher 215 der Vorrichtung 200 bis zur Verwendung zwischengespeichert werden.

Die digitale Dokumentendruckvorlage 205 kann aus einer Mehrzahl von digitalen Dokumentendruckvorlagen des Dokuments 201 mit verkleinerten Sicherheitsmerkmalen 203 anhand des vorbestimmten Verkleinerungsfaktors ausgewählt werden. Die Mehrzahl von digitalen Dokumentdruckvorlagen 205 kann unterschiedliche Abmessungen des Dokuments 201 in der digitalen Dokumentdruckvorlage 205 und/oder unterschiedliche Abmessungen des Sicherheitsmerkmals 203 und/oder unterschiedliche Anordnungen des Sicherheitsmerkmals 203 umfassen. Beispielsweise kann die digitale Dokumentendruckvorlage 205 diejenige aus der Mehrzahl von digitalen Dokumentendruckvorlagen des Dokuments 201 sein, die den kleinsten Verkleinerungsfaktor ermöglicht.

Das Verfahren 100 umfasst ein automatisiertes Herstellen 103 des Dokuments 201, insbesondere durch das Herstellungselement 219 der Vorrichtung 200, unter Verwendung der digitalen Dokumentendruckvorlage 205.

Wie in der Fig. 2 dargestellt, können das Dokument 201 und entsprechend die digitale Dokumentendruckvorlage 205 ein weiteres Sicherheitsmerkmal 211 umfassen. Das weitere Sicherheitsmerkmal 211 kann eine um einen weiteren vorbestimmten Verkleinerungsfaktor verkleinerte Fassung eines weiteren Referenzsicherheitsmerkmals 213 sein. Die digitale Referenzdruckvorlage 209 kann das weitere Referenzsicherheitsmerkmal 213 umfassen.

Das Verfahren 100 kann ferner ein Bestimmen des vorbestimmten Verkleinerungsfaktors basierend auf dem weiteren vorbestimmten Verkleinerungsfaktor umfassen. Insofern kann der Verkleinerungsfaktor abhängig von dem weiteren Verkleinerungsfaktor bestimmt werden kann, beispielsweise wenn das Sicherheitsmerkmal 207 und das weitere Sicherheitsmerkmal 213 sich bei der Überprüfung des Dokuments 201 gegenseitig beeinflussen, wie beispielsweise aufgrund von Interferenzen oder Überlappungen.

Das Bestimmen des vorbestimmten Verkleinerungsfaktors kann basierend auf einer Gewichtung des vorbestimmten Verkleinerungsfaktors und einer Gewichtung des weiteren vorbestimmten Verkleinerungsfaktors durchgeführt werden, insbesondere anhand einer Optimierung eines Zielwerts. Hierbei kann die jeweilige Gewichtung auf dem zumindest einen Parameter des Referenzsicherheitsmerkmals 207 und/oder auf dem zumindest einem Parameter der Vorrichtung 200 zum automatisierten Herstellen des Dokuments 201 basieren.

Das Verfahren 100 kann ferner ein Neuanordnen des Sicherheitsmerkmals 203 relativ zu dem weiteren Sicherheitsmerkmal 211 in der digitalen Dokumentenvorlage 205 umfassen.

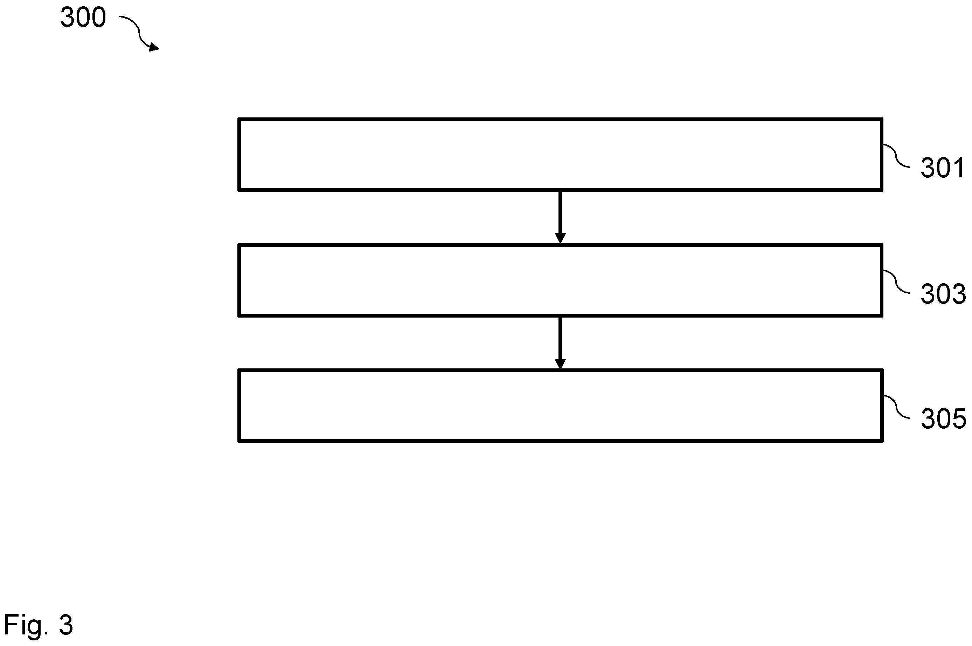

Fig. 3 zeigt ein schematisches Ablaufdiagramm eines Verfahrens 300 zum automatisierten Herstellen einer in der Fig. 2 dargestellten digitalen Dokumentendruckvorlage 205 zum Herstellen eines in der Fig. 2 dargestellten Dokuments 201 gemäß einer Ausführungsform. Das Verfahren 300 wird im Folgenden unter weiterem Verweis auf die Fig. 2 beschrieben.

Das Verfahren 300 umfasst ein Bereitstellen 301 einer digitalen Referenzdruckvorlage 209, wobei die digitale Referenzdruckvorlage 209 ein Referenzsicherheitsmerkmal 207 aufweist.

Das Verfahren 300 umfasst ferner ein Verkleinern 303 der digitalen Referenzdruckvorlage 209 um einen vorbestimmten Verkleinerungsfaktor.

Das Verfahren 300 umfasst ferner ein Ausgeben 305 der verkleinerten digitalen Referenzdruckvorlage 209 als die digitale Dokumentendruckvorlage 205.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt, müssen einzelne Elemente, die in Verbindung stehend dargestellt wurden, nicht direkt miteinander in Verbindung stehen; Zwischenelemente können zwischen den verbundenen Elementen vorgesehen sein. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Verfahren zum automatisierten Herstellen eines Dokuments
- 101: Bereitstellen einer digitalen Dokumentendruckvorlage
- 103: Automatisiertes Herstellen des Dokuments
- 200: Vorrichtung zum automatisierten Herstellen eines Dokuments
- 201: Dokument
- 203: Sicherheitsmerkmal
- 205: Digitale Dokumentendruckvorlage
- 207: Referenzsicherheitsmerkmal
- 209: Digitale Referenzdruckvorlage
- 211: Weiteres Sicherheitsmerkmal
- 213: Weiteres Referenzsicherheitsmerkmal
- 215: Elektronischer Speicher
- 217: Prozessor
- 219: Herstellungselement
- 300: Verfahren zum automatisierten Herstellen einer digitalen Dokumentendruckvorlage
- 301: Bereitstellen einer digitalen Referenzdruckvorlage
- 303: Verkleinern der digitalen Referenzdruckvorlage
- 305: Ausgeben der verkleinerten digitalen Referenzdruckvorlage

## Patentansprüche

1. Verfahren (100) zum automatisierten Herstellen eines Dokuments (201) mit einem Sicherheitsmerkmal (203), umfassend:
Bereitstellen (101) einer digitalen Dokumentendruckvorlage (205) für die Herstellung des Dokuments (201) mit dem Sicherheitsmerkmal (203), wobei das Sicherheitsmerkmal (203) eine um einen vorbestimmten Verkleinerungsfaktor verkleinerte Fassung eines Referenzsicherheitsmerkmals (207) ist; und
automatisiertes Herstellen (103) des Dokuments (201) unter Verwendung der digitalen Dokumentendruckvorlage (205).

2. Verfahren (100) nach Anspruch 1, wobei im Schritt des Bereitstellens (101) der digitalen Dokumentendruckvorlage (205) eine digitale Referenzdruckvorlage (209) des Dokuments (201) bereitgestellt wird, und wobei die digitale Referenzdruckvorlage (209) um den vorbestimmten Verkleinerungsfaktor verkleinert wird, um die digitale Dokumentendruckvorlage (205) zu erhalten.

3. Verfahren (100) nach Anspruch 2, wobei das Bereitstellen (101) der digitalen Dokumentendruckvorlage (205) für die Herstellung des Dokuments (201) mit dem Sicherheitsmerkmal (203) umfasst:
Erfassen eines Bilds eines weiteren Dokuments und Generieren der digitalen Referenzdruckvorlage (209) basierend auf dem Bild des weiteren Dokuments.

4. Verfahren (100) nach einem der vorhergehenden Ansprüche, wobei im Schritt des Bereitstellens (101) der digitalen Dokumentendruckvorlage (205) die digitale Dokumentendruckvorlage (205) aus einer Mehrzahl von digitalen Dokumentendruckvorlagen des Dokuments (201) mit verkleinerten Sicherheitsmerkmalen (203) anhand des vorbestimmten Verkleinerungsfaktors ausgewählt wird.

5. Verfahren (100) nach Anspruch 4, wobei die Mehrzahl von digitalen Dokumentdruckvorlagen (205) unterschiedliche Abmessungen des Dokuments (201) in der digitalen Dokumentdruckvorlage (205) und/oder unterschiedliche Abmessungen des Sicherheitsmerkmals (203) und/oder unterschiedliche Anordnungen des Sicherheitsmerkmals (203) umfassen.

6. Verfahren (100) nach einem der vorhergehenden Ansprüche, wobei der vorbestimmte Verkleinerungsfaktor eine relative Höhe, eine relative Breite und/oder eine relative Tiefe des Sicherheitsmerkmals (203) zu dem Referenzsicherheitsmerkmal (207) angibt.

7. Verfahren (100) nach einem der vorhergehenden Ansprüche, wobei das Verfahren (100) ein Ermitteln des vorbestimmten Verkleinerungsfaktors basierend auf zumindest einem Parameter des Referenzsicherheitsmerkmals (207) umfasst.

8. Verfahren (100) nach Anspruch 7, wobei der zumindest eine Parameter des Referenzsicherheitsmerkmals (207) umfasst: einen Zusammenhang zwischen Abmessung des Referenzsicherheitsmerkmals (207) und einem Alphafehler und/oder einem Betafehler und/oder einer Überprüfungsdauer bei einer automatischen Echtheitsüberprüfung des um den vorbestimmten Verkleinerungsfaktor verkleinerten Sicherheitsmerkmals (203) durch eine Überprüfungsvorrichtung, und/oder einen Zusammenhang zwischen Abmessung des Referenzsicherheitsmerkmals (207) und einem Alphafehler und/oder einem Betafehler und/oder einer Überprüfungsdauer bei einer manuellen Echtheitsüberprüfung des um den vorbestimmten Verkleinerungsfaktor verkleinerten Sicherheitsmerkmals (203) durch einen Benutzer.

9. Verfahren (100) nach einem der vorhergehenden Ansprüche, wobei das Verfahren (100) ein Ermitteln des vorbestimmten Verkleinerungsfaktors basierend auf zumindest einem Parameter einer Vorrichtung (200) zum automatisierten Herstellen des Dokuments (201) umfasst.

10. Verfahren (100) nach Anspruch 9, wobei der zumindest eine Parameter der Vorrichtung (200) zum automatisierten Herstellen des Dokuments (201) umfasst: einen Zusammenhang zwischen der Abmessung des Sicherheitsmerkmals (203) und einem Energieeinsatz, und/oder einem Materialeinsatz und/oder einer Herstellungszeitdauer bei der Herstellung des Dokuments (201).

11. Verfahren (100) nach einem der vorhergehenden Ansprüche, wobei das Dokument (201) ein weiteres Sicherheitsmerkmal (211) umfasst, wobei die digitale Dokumentendruckvorlage (205) das weitere Sicherheitsmerkmal (211) umfasst, wobei das weitere Sicherheitsmerkmal (211) eine um einen weiteren vorbestimmten Verkleinerungsfaktor verkleinerte Fassung eines weiteren Referenzsicherheitsmerkmals (213) ist, und wobei das Verfahren (100) ferner umfasst:
Bestimmen des vorbestimmten Verkleinerungsfaktors basierend auf dem weiteren vorbestimmten Verkleinerungsfaktor.

12. Verfahren (100) nach Anspruch 11, wobei das Bestimmen des vorbestimmten Verkleinerungsfaktors basierend auf einer Gewichtung des vorbestimmten Verkleinerungsfaktors und einer Gewichtung des weiteren vorbestimmten Verkleinerungsfaktors durchgeführt wird, insbesondere anhand einer Optimierung eines Zielwerts, wobei insbesondere die jeweilige Gewichtung auf dem zumindest einen Parameter des Referenzsicherheitsmerkmals (207) und/oder auf dem zumindest einem Parameter der Vorrichtung (200) zum automatisierten Herstellen des Dokuments (201) basiert.

13. Verfahren (100) nach Anspruch 11 oder 12, ferner umfassend:
Neuanordnen des Sicherheitsmerkmals (203) relativ zu dem weiteren Sicherheitsmerkmal (211) in der digitalen Dokumentenvorlage (205).

14. Vorrichtung (200) zum automatisierten Herstellen eines Dokuments (201) mit einem Sicherheitsmerkmal (203), umfassend:
einen Prozessor (217), welcher ausgebildet ist, eine digitale Dokumentendruckvorlage (205) für die Herstellung des Dokuments (201) mit dem Sicherheitsmerkmal (203) bereitzustellen, wobei das Sicherheitsmerkmal (203) eine um einen vorbestimmten Verkleinerungsfaktor verkleinerte Fassung eines Referenzsicherheitsmerkmals (207) ist; und
ein Herstellungselement (219), welches ausgebildet ist, das Dokument (201) unter Verwendung der digitalen Dokumentendruckvorlage (205) automatisiert herzustellen.

15. Verfahren (300) zum automatisierten Herstellen einer digitalen Dokumentendruckvorlage (205) zum Herstellen eines Dokuments (201), mit:
Bereitstellen (301) einer digitalen Referenzdruckvorlage (209), wobei die digitale Referenzdruckvorlage (209) ein Referenzsicherheitsmerkmal (207) aufweist,
Verkleinern (303) der digitalen Referenzdruckvorlage (209) um einen vorbestimmten Verkleinerungsfaktor, und
Ausgeben (305) der verkleinerten digitalen Referenzdruckvorlage (209) als die digitale Dokumentendruckvorlage (205).
